# EUROPÄISCHE PATENTSCHRIFT

(11) **EP 0 769 785 B1**
(45) Veröffentlichungstag und Bekanntmachung des Hinweises auf die Patenterteilung: **17.03.1999**
(21) Anmeldenummer: 95810649.4
(22) Anmeldetag: 18.10.1995
(51) Int. Cl.: G21C 19/07

(54) **Lagergestell zum Lagern nuklearer Brennelemente und Lageranordnung mit mindestens einem derartigen Lagergestell**
Storage rack for storing nuclear fuel elements and storage facility with at least one such storage rack
Râtelier pour le stockage d'éléments de combustible nucléaire et dispositif de stockage comportant au moins un tel râtelier

(43) Veröffentlichungstag der Anmeldung: 23.04.1997
(73) Patentinhaber: CCI AG, 8404 Winterthur (CH)
(72) Erfinder: Kielbowicz, Stanislaw, CH-8820 Wädenswil (CH)
(74) Vertreter: Trieblnig, Adolf

(56) Entgegenhaltungen:
- EP-A- 0 014 422
- FR-A- 2 462 767
- FR-A- 2 680 909

## Beschreibung

Die Erfindung betrifft ein Lagergestell zum Lagern nuklearer Brennelemente entsprechend dem Oberbegriff des Patentanspruchs 1 sowie eine Lageranordnung mit einem derartigen Lagergestell.

Bei einem aus der DE-OS 29 30 237 bekannten Lagergestell der genannten Art sind die zur Aufnahme der Brennelemente bestimmten vertikalen Kanäle durch übereinanderstehend angeordnete Blechstreifen gebildet, welche mit an ihren Rändern ausgebildeten Einschnitten versehen und über diese kreuzweise ineinandersteckbar und gegenseitig in ihrer Lage gehalten sind, wobei die sich kreuzenden Blechstreifen jeweils um deren halbe Breitenabmessung gegeneinander höhenversetzt angeordnet sind. Beim Zusammenbau des bekannten Lagergestells müssen die Blechstreifen einzeln eingesetzt werden, wobei jeweils eine untere Lage aus zueinander parallelen Blechstreifen erstellt und hierauf eine obere Lage aus quer zu den Blechstreifen der unteren Lage verlaufenden oberen Blechstreifen mit ihren Einschnitten in die Einschnitte der unteren Blechstreifen eingeführt wird. Das in jeweils zunehmender Bauhöhe von Hand erfolgende Ineinanderstecken der relativ langen und relativ dünnen Blechstreifen erfordert einen erheblichen Montageaufwand beim Zusammenbau des durch eine Vielzahl, z.B. mehreren hundert, Blechstreifen zu bildenden Lagergestells.

Der Erfindung liegt die Aufgabe zugrunde, ein mit geringerem Arbeits- und Kostenaufwand als bisher montierbares Lagergestell in einer gegenüber bisherigen Ausführungen vereinfachten Bauweise zu schaffen.

Diese Aufgabe wird erfindungsgemäss durch die kennzeichnenden Merkmale des Patentanspruchs 1 gelöst.

Die erfindungsgemässe Ausführung gestattet eine Mechanisierung der Montage und ermöglicht auf einfache Weise einen weiteren Ausbau bzw. eine Aenderung der Lageranordnung. Ein wesentlicher Vorteil besteht insbesondere darin, dass die mit hoher Genauigkeit und in grossen Serien herstellbaren Blechstreifen an einer speziell ausgerüsteten Montagestelle maschinell zusammengeführt, ineinandergesteckt und z.B. mittels einer Pressvorrichtung zu Gitterrostelementen vorgefertigt werden können. Die Gitterrostelemente können als weitgehend verwindungssteife Montageeinheiten übereinandergestapelt und auf einfache Weise, durch selbstzentrierendes Zusammenführen der Kupplungsteile mit den entsprechenden nutenartigen Vertiefungen des jeweils benachbarten Gitterrostelements miteinander verkuppelt werden. Entsprechend können die zur Aufnahme der Brennelemente bestimmten Kanäle des Lagergestells in wenigen, leicht ausführbaren Arbeitsgängen erstellt werden, wobei die ineinandergreifenden Kupplungsteile und Vertiefungen eine sichere gegenseitige Zentrierung und eine feste Positionierung der Gitterrostelemente gewährleisten. Ein weiterer Vorteil der erfindungsgemässen Ausführung besteht darin, dass die schichtweise angeordneten Blechstreifen jeweils entweder zu einteiligen, den ganzen Querschnitt des Lagergestells überdeckenden Montageeinheiten oder zu mehrteiligen, je einen Teil, z.B. die Hälfte oder ein Viertel, des Querschnitts des Lagergestells überdeckenden Montageeinheiten zusammengefasst sein können. Bei mehrteilig ausgebildeten Montageeinheiten kann jeweils der entsprechende Teil des Querschnitts des Lagergestells zugänglich gemacht und/oder für andere Zwecke, z.B. als Reserveabschnitt, bereitgestellt werden. Die Blechstreifen können in relativ grossen Serien hergestellt, zu beliebig grossen Gitterrostelementen zusammengefasst und in dieser leicht zu handhabenden Form für Wartungs- und Reparaturarbeiten und/oder für eine spätere Erweiterung der Lagerkapazität in Reserve gehalten werden.

Ausgestaltungen des Erfindungsgegenstandes sind in den abhängigen Ansprüchen angegeben.

Gemäss Anspruch 2 kann auf einfache Weise, mit gegenüber bisherigen Ausführungen wesentlich verringertem Herstellungs- und Montageaufwand, aus entsprechend lose aufeinander stapelbaren Gitterrostelementen ein Lagergestell in doppelwandiger Ausführung zusammengebaut werden, bei der die Wände der Kanäle je durch einen Zwischenraum von der Wand des benachbarten Kanals getrennt sind. Entsprechend kann die neutronenabsorbierende Wirkung der Kanalwände erhöht bzw. eine vorbestimmte Wirkung durch Verwendung von geringer legiertem und damit kostengünstigerem Material erzielt sowie eine verbesserte Kühlung der Kanalwände gewährleistet werden.

Die Ausführung nach Anspruch 3 ergibt ein Lagergestell aus besonders einfach zu handhabenden Gitterrostelementen, welche insbesondere ohne zusätzliche Verbindungsmittel miteinander koppelbar sind.

Gemäss Anspruch 4 kann das Lagergestell auch aus einfacher ausgeführten Gitterrostelementen zusammengesetzt sein, welche je durch entsprechend einfach geformte Blechstreifen gebildet sind und welche miteinander über die zwischen die Blechstreifen lose einsetzbaren Kupplungsteile verbindbar sind.

Die Ausführung nach Anspruch 5 ergibt eine in sich formstabile Tragstruktur des Lagergestells.

Eine Lageranordnung mit mindestens einem erfindungsgemässen Lagergestell ist Gegenstand des Anspruchs 6.

Die Lageranordnung nach Anspruch 7 gestattet auf einfache Weise eine Aufstockung des Lagergestells und damit eine entsprechende Vergrösserung, gegebenenfalls eine Verdoppelung, der Lagerkapazität.

Gemäss Anspruch 8 kann das obere Lagergestell mit dem unteren Lagergestell auf einfache Weise über die an den betreffenden Gitterrostelementen ausgebildeten Vorsprünge und Vertiefungen fest verkoppelt werden.

Gemäss Anspruch 9 können die in der zweiten Höhenlage angeordneten Brennelemente je auf einem der bereits im unteren Lagergestell befindlichen Brennelemente, und damit ohne zusätzliche Belastung des unteren Lagergestells, abgestützt werden.

Gemäss Anspruch 10 können die in der zweiten Höhenlage angeordneten Brennelemente auch über die Kreuzungsstellen der Blechstreifen des obersten Gitterrostelementes des unteren Lagergestells auf diesem abgestützt werden.

Gemäss Anspruch 11 kann das obere Lagergestell mit einer Bauhöhe ausgeführt werden, die nur einem Bruchteil der Länge der in der zweiten Höhenlage einzulagernden Brennelemente entspricht, so dass die Lageranordnung mit einer gesamten Bauhöhe ausgeführt werden kann, die wesentlich kleiner ist als die doppelte Länge der zu lagernden Brennelemente.

Die Erfindung wird anhand von in der Zeichnung schematisch dargestellten Ausführungsbeispielen erläutert. Es zeigen:
- Fig.1: ein erfindungsgemäss ausgebildetes Lagergestell einer Lageranordnung für nukleare Brennelemente in einer perspektivischen Teilansicht,
- Fig.2 u. 3: weitere Lagergestelle, je in einer abgewandelten Ausführungsform und je in einer auseinandergezogenen perspektivischen Teilansicht,
- Fig.4: eine erfindungsgemäss ausgebildete Lageranordnung in einer abgewandelten Ausführungsform, mit einem unteren Lagergestell und einem auf dieses aufsetzbaren oberen Lagergestell, in einem auseinandergezogenen Teillängsschnitt entsprechend der Linie IV - IV in Fig.1,
- Fig.5: eine weitere Lageranordnung nach einer abgewandelten Ausführungsform, in einem Teillängsschnitt entsprechend der Darstellung nach Fig.4,
- Fig.6: eine Einzelheit eines Lagergestells in einer gegenüber der Ausführung nach Fig.2 abgewandelten Ausführungsform, in einem Teillängsschnitt entsprechend der Linie VI - VI in Fig.2,
- Fig.7, 8 u. 9: weitere Einzelheiten von Lagergestellen, je nach einer abgewandelten Ausführungsform.

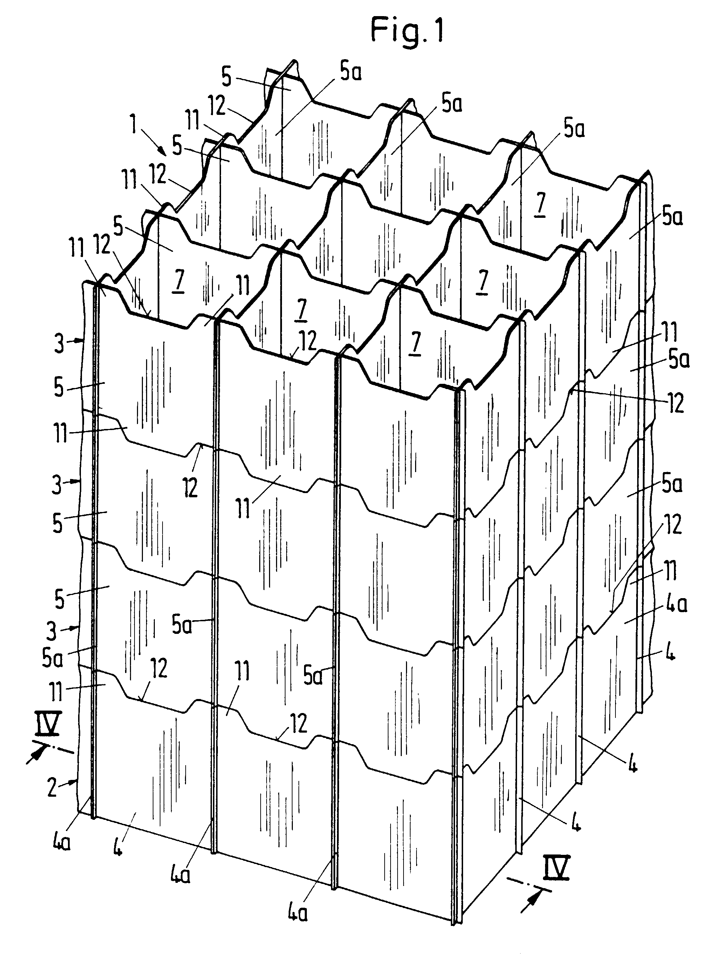

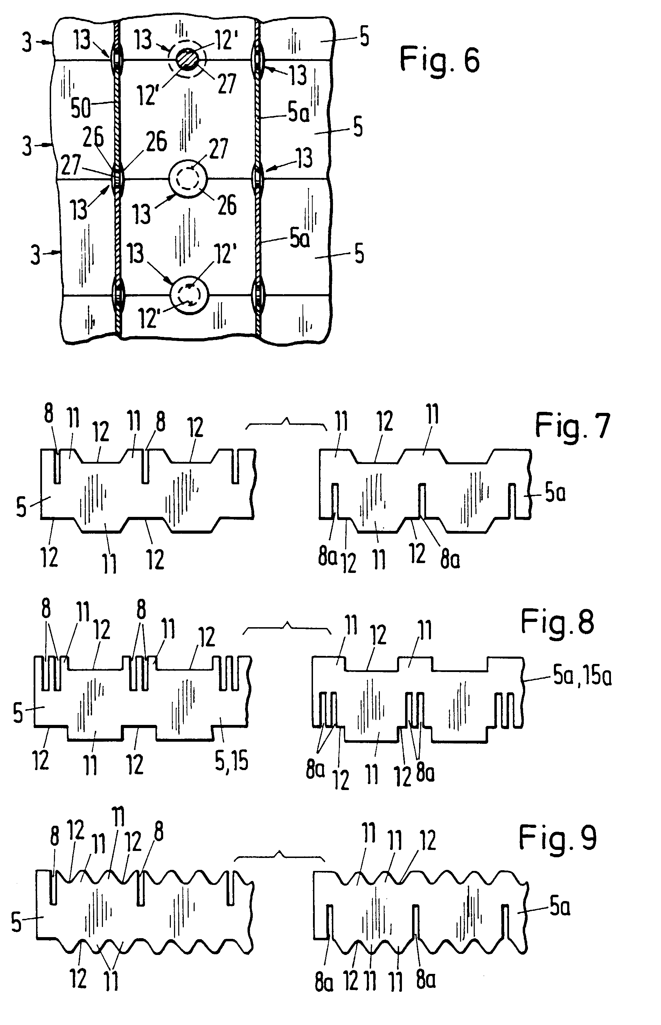

Die Lageranordnung nach Fig.1 enthält ein in ein Lagerbecken einsetzbares Lagergestell 1 mit einem auf dem Boden des Lagerbeckens abstützbaren unteren Gitterrostelement 2 und mehreren, auf dieses aufsetzbaren, schichtweise übereinander stapelbaren Montageeinheiten in Form von entsprechenden Gitterrostelementen 3, von denen in der Zeichnung nur drei dargestellt sind. Die Gitterrostelemente 2 und 3 sind je durch kreuzweise angeordnete, stehende Blechstreifen 4 und 4a bzw. 5 und 5a gebildet, welche je aus einem neutronenabsorbierenden Werkstoff, z.B. einer Borlegierung, bestehen und welche vertikale Kanäle 7 zur Aufnahme je eines zu lagernden Brennelements 17 begrenzen. Die Blechstreifen 4 und 4a bzw. 5 und 5a erstrecken sich je in waagrechter Richtung über eine Reihe von mehreren Kanälen 7 und sind mittels an ihren Rändern angebrachten Einschnitten 8 und 8a (Fig.7) ineinandersteckbar ausgeführt und durch diese Steckverbindung gegenseitig in ihrer Lage gehalten und zu einem verwindungssteifen Einbauteil verbunden. Die Gitterrostelemente 2 und 3 können sich je über einen Teil, z.B. die Hälfte oder ein Viertel, des Querschnitts des Lagergestells 1 oder, wie beim dargestellten Beispiel, über dessen ganzen Querschnitt erstrecken.

Wie insbesondere aus der Fig.7 hervorgeht, können sich die Einschnitte 8 und 8a je über die halbe Höhe bzw. Breite der Blechstreifen 4 und 5 bzw. 4a und 5a erstrecken. Durch die beschriebene Ausführung wird eine sichere Steckverbindung erzielt, und die Gitterrostelemente 2 und 3 können mit je im wesentlichen in einer Ebene liegenden Unterseiten bzw. Oberseiten ausgeführt werden, wodurch die Gitterrostelemente 2 und 3 leicht aufeinander aufgesetzt und voneinander getrennt werden können.

Die Blechstreifen 5 und 5a sind an ihren oberen und unteren Rändern, zusätzlich zu den Einschnitten 8 und 8a, je nach Art einer Verzahnung mit über ihre Längserstreckung verteilt angeordneten, zahnartigen Vorsprüngen 11 und entsprechenden nutenartigen Vertiefungen 12 ausgeführt, die zum Zusammenführen mit den entsprechenden Vertiefungen 12 bzw. Vorsprüngen 11 der Steckbleche 4, 4a sowie 5 und 5a des jeweils in Aufsetzrichtung benachbarten Gitterrostelementes 2 bzw. 3 bestimmt sind. Entsprechend der Darstellung nach Fig.1 können die Blechstreifen 4 und 4a des unteren Gitterrostelements 2 mit ebenen, unverzahnten unteren Rändern ausgeführt sein. Abweichend von der dargestellten Ausführung, können die Blechstreifen 5 und 5a des obersten Gitterrostelements 3 mit unverzahnten oberen Rändern ausgeführt sein.

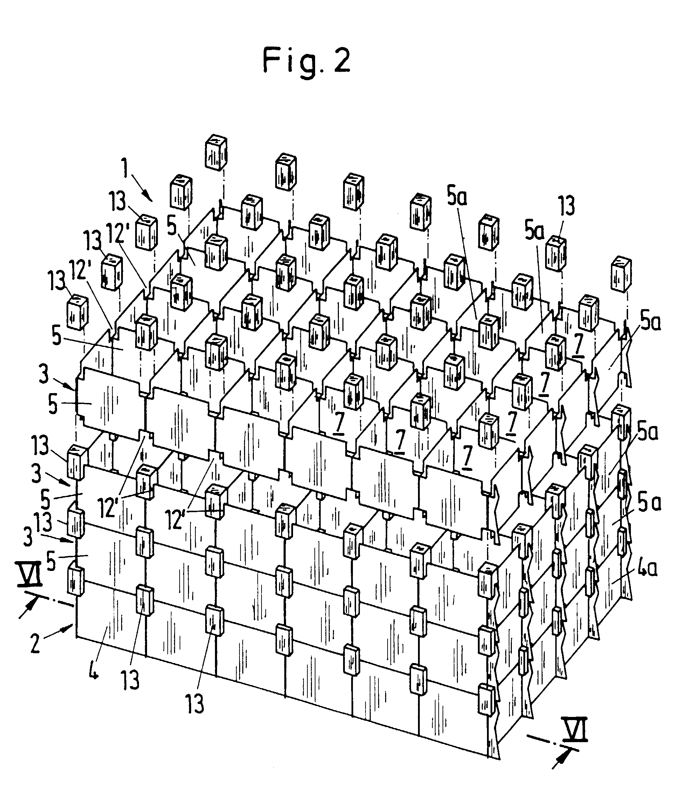

In der Zeichnung sind einander entsprechende Teile mit gleichen Bezugszeichen versehen. Beim Lagergestell nach Fig.2 sind die Blechstreifen 4, 4a und 5 und 5a mit Vertiefungen 12' ausgeführt, welche je in Aufsetzrichtung fluchtend zu den in den entsprechenden, am benachbarten Blechstreifen 5, 5a bzw. 4, 4a ausgebildeten Vertiefungen 12' angeordnet sind und welche je zur Aufnahme eines in die betreffende Vertiefung 12' des einen Blechstreifens 4, 4a bzw. 5, 5a einsetzbar und mit der in Aufsetzrichtung benachbarten Vertiefung 12' des benachbarten Blechstreifens 5, 5a bzw. 4, 4a zusammenführbaren, separaten Zwischenstücks 13 bestimmt sind. Die Vertiefungen 12' sind darstellungsgemäss je im Bereich der Kreuzungsstellen der Blechstreifen 4 und 4a bzw. 5 und 5a angeordnet und rechteckförmig ausgeführt. Die Zwischenstücke 13 sind darstellungsgemäss als kubische Kupplungsteile ausgeführt, durch welche die Gitterrostelemente 2 und 3 je mit dem in Aufsetzrichtung benachbarten Gitterrostelement 3 bzw. 2 formschlüssig verbunden werden können. Die Zwischenstücke 13 können auch mit nicht dargestellten Führungsnuten für die die jeweilige Vertiefung 13' begrenzenden Abschnitte der Blechstreifen 4, 4a, 5 und 5a versehen sein.

Entsprechende Vertiefungen 12' können auch zwischen den sich kreuzenden Blechstreifen 4 und 4a bzw. 5 und 5a angeordnet und in beliebigen Formen, z.B. rechteckförmig, dreieckförmig, trapezförmig oder, wie in Fig.6 dargestellt, halbrund ausgeführt sein. Ebenso können die Zwischenstücke 13 in entsprechend beliebigen Formen, gemäss Fig.6 in Form von lose in die Vertiefungen 12' einsetzbaren knopfartigen Kupplungsteilen ausgeführt sein, welche je einen zwischen zwei Endplatten 26 angeordneten, in die betreffende Vertiefung 12' einführbaren zylindrischen Führungsschaft 27 aufweisen.

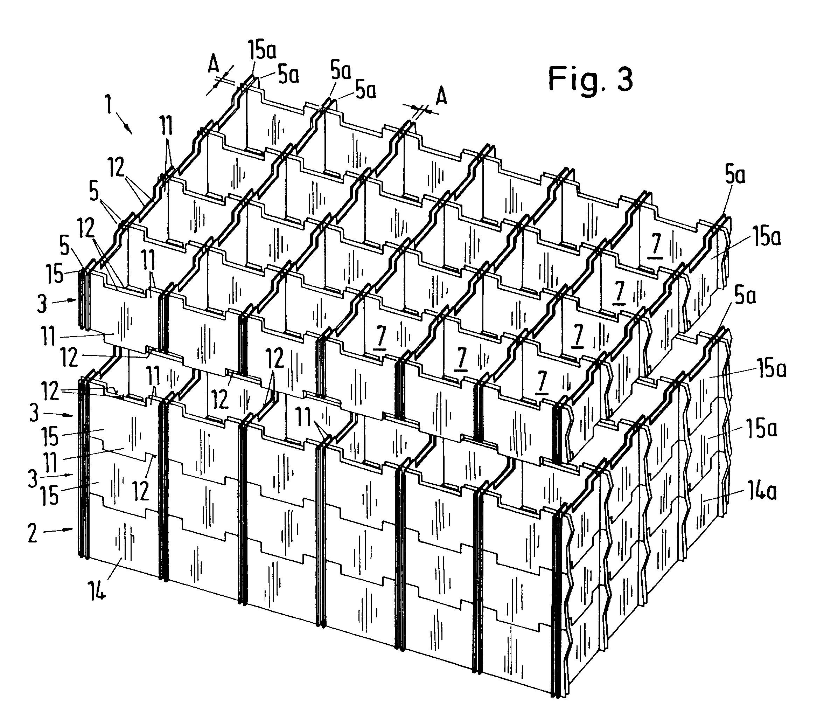

Beim Lagergestell nach Fig.3 sind die Kanäle 7 doppelwandig ausgeführt, d.h. durch je zwei einen durchströmbaren Zwischenraum bildende Wandpartien aus einem neutronenabsorbierenden Material gegen den in Querrichtung benachbarten Kanal 7 bzw. gegen die Aussenseite des Lagergestells 1 abgeschirmt. Dabei sind die je einen Wandabschnitt einer Reihe der Kanäle 7 bildenden Blechstreifen 4 und 4a bzw. 5 und 5a je in einem entsprechenden Abstand A von einem einen Wandabschnitt der jeweils benachbarten Reihe der Kanäle 7 bildenden zweiten Blechstreifen 4, 4a, 5, 5a bzw. von einem einen Teil der Aussenwand des Lagergestells bildenden Randblechstreifen 14, 14a und 15, 15a angeordnet.

Entsprechend der Darstellung nach Fig.8 sind die Blechstreifen 5 und 15 sowie die nicht näher dargestellten Blechstreifen 4 und 14 je mit über die eine, darstellungsgemäss obere Hälfte verlaufenden doppelten Einschnitten 8 versehen, während die Blechstreifen 5a und 15a sowie 4a und 14a je mit über die andere, untere Hälfte angeordneten doppelten Einschnitten 8a ausgeführt sind, die jeweils ein Ineinanderstecken der die doppelwandige Gitterrostkonstruktion bildenden Blechstreifen ermöglicht. Die Vorsprünge 11 und die Vertiefungen 12 können ebenfalls in beliebigen Formen, z.B. gemäss Fig.9 dreieckförmig, gemäss Fig.1 und 7 trapezförmig oder, wie in den Fig.3 und 8 dargestellt, rechteckförmig, mit spitzen oder mit abgerundeten Ecken, ausgeführt sein. Es versteht sich, dass auch beim Lagergestell nach Fig.3 mit doppelwandig ausgeführten Kanälen 7 die Gitterrostelemente 2 und 3 an den aufeinander aufsetzbaren Rändern ihrer Blechstreifen 4, 5, 14, 15 bzw. 4a, 5a, 14a und 15a mit in Aufsetzrichtung fluchtenden Vertiefungen 12' ausgeführt und durch in diese lose einsetzbare Kupplungsteile in Form von separaten Zwischenstücken je mit dem benachbarten Gitterrostelement 3 bzw. 2 formschlüssig gekoppelt werden können.

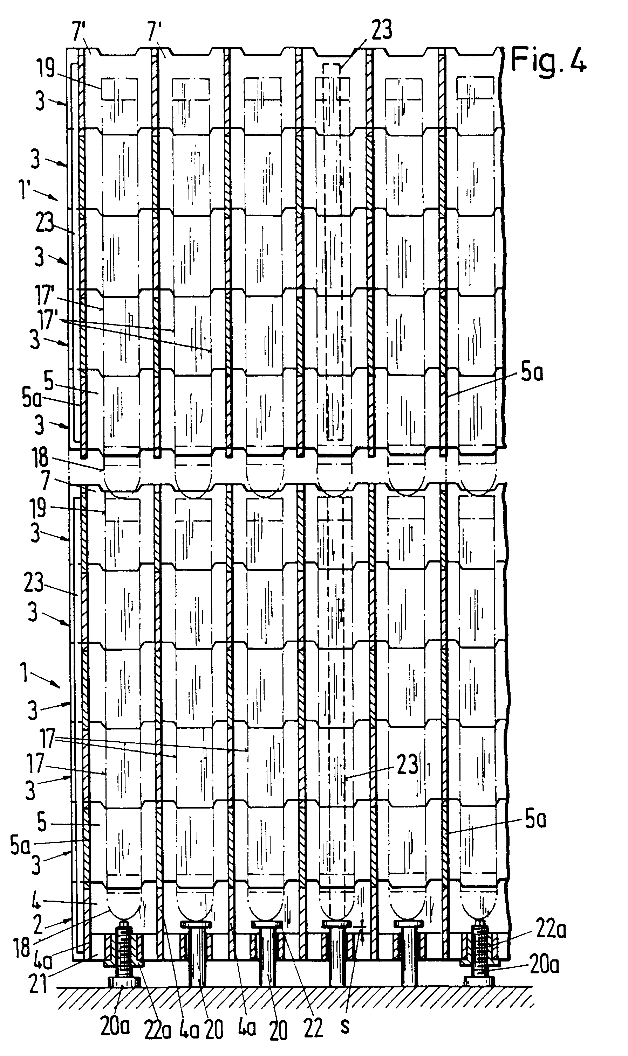

Die Lageranordnung nach Fig.4 enthält ein unteres Lagergestell 1 entsprechend der Ausführung nach Fig.1, mit Kanälen 7 zur Aufnahme von strichpunktiert dargestellten Brennelementen 17, sowie ein auf das Lagergestell 1 aufsetzbares oberes Lagergestell 1' mit zu den Kanälen 7 des Lagergestells 1 fluchtenden Kanälen 7' zur Aufnahme von in einer zweiten Höhenlage einzulagernden Brennelementen 17'. Bei dieser Ausführung sind die unteren Brennelemente 17 mit ihren Fusspartien 18 über Tragstücke 20, 20a auf dem Boden des Lagerbeckens abgestützt. Die meisten Tragstücke, darstellungsgemäss die Tragstücke 20, sind in einer im unteren Gitterrostelement 2 ausgebildeten, die Kanäle 7 unterteilenden Stützkonstruktion 21 vertikal beweglich angeordnet und je mit einem über die Stützkonstruktion 21 vorstehenden Stützteil 22 ausgeführt. Die Stützteile 22 sind je mit einem vertikalen Spiel S über der Stützkonstruktion 21 positionierbar, welches Spiel S entsprechend vertikale Relativbewegungen zwischen den Tragstücken 20 und der Stützkonstruktion 21 zulässt. Eine über den Querschnitt des Lagergestells 1 verteilt angeordnete Teilzahl der Tragstücke, darstellungsgemäss die Tragstücke 20a, sind mit der Stützkonstruktion 21 über Tragmittel 22a gekoppelt, über welche das untere Gitterrostelement 2 und damit das ganze Lagergestell 1 auf diesen Tragstücken 20a abgestützt sind. Als Tragmittel 22a können in der Stützkonstruktion 21 befestigte Gewindebüchsen vorgesehen sein, in denen die Tragstücke 20a einschraubbar und damit höhenverstellbar und feststellbar gehalten sind. Ueber die Tragstücke 20 und 20a kann das Gewicht der Brennelemente 17 ohne Belastung des Lagergestells 1 auf den Boden des Lagerbeckens übertragen werden.

Das in Fig.4 in abgehobener Stellung dargestellte, auf das Lagergestell 1 aufsetzbare obere Lagergestell 1' ist, wie das untere Lagergestell 1, aus übereinander stapelbaren, aufeinander aufsetzbaren und in beschriebener Weise miteinander formschlüssig kuppelbaren Gitterrostelementen 3 zusammengesetzt. Die von oben her in die Kanäle 7' einführbaren oberen Brennelemente 17' können mit ihren Fusspartien 18 über nicht dargestellte Zwischenstücke oder, wie dargestellt, unmittelbar auf den Kopfpartien 19 der unteren Brennelemente abgestützt werden, welche mit Positionierteilen für die Fusspartien 18 versehen sein können. Entsprechend kann auch das Gewicht der oberen Brennelemente 17' ohne zusätzliche Belastung des unteren Lagergestells 1 auf den Boden des Lagerbeckens übertragen werden.

Die Lagergestelle 1 und 1' können darstellungsgemäss je mit mehreren aufrecht angeordneten Verbindungsteilen 23 ausgeführt sein, welche je zumindest mit dem unteren Gitterrostelement 2 und dem obersten Gitterrostelement 3 des Lagergestells 1 bzw. mit dem untersten und dem obersten der Gitterrostelemente 3 des Lagergestells 1' fest verbunden sind, wodurch jeweils eine formstabile Tragkonstruktion des betreffenden Lagergestells 1 bzw. 1' erzielbar ist.

Es ist auch eine Ausführung möglich, bei der die unteren Brennelemente 17 je mit einem seitlichen Spiel in entsprechenden Oeffnungen der Stützkonstruktion 21 angeordnet und, von dieser unabhängig, mit ihren Fusspartien 18 je unmittelbar auf dem Boden des Lagerbodens abgestützt und mit ihren Kopfpartien 19 über nicht dargestellte Führungsmittel je im betreffenden Kanal 7 vertikal beweglich geführt sind. Bei dieser Ausführung kann das untere Gitterrostelement 2 in einer besonders leichten Bauweise ausgeführt werden.

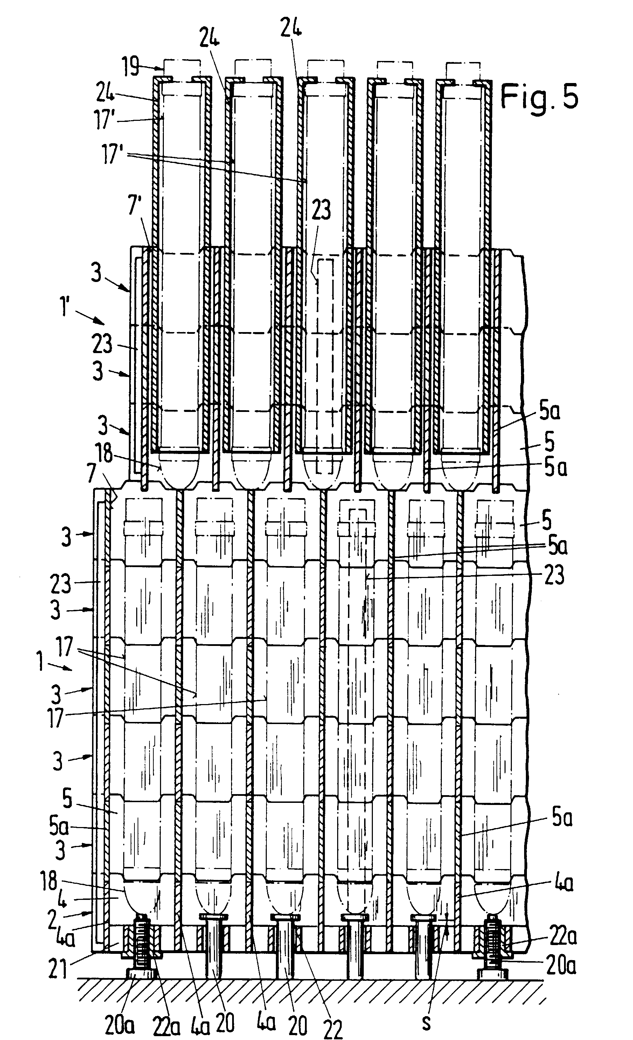

Entsprechend der Darstellung nach Fig.5 kann das obere Lagergestell 1' auch mit gegenüber den Kanälen 7 des unteren Lagergestells 1 seitlich so weit versetzten Kanälen 7' ausgeführt sein, dass die oberen Brennelemente 17' je auf den Kreuzungsstellen der Blechstreifen 5 und 5a des obersten Gitterrostelements 3 des Lagergestells 1 abgestützt werden können. Entsprechend wird das Gewicht der oberen Brennelemente 17' über die Wände der Kanäle 7 auf das vom Gewicht der unteren Brennelemente 17 entlastete untere Gitterrostelement 2 und über dieses auf den Boden des Lagerbeckens übertragen. Bei dieser Ausführung wird das untere Gitterrostelement 2 nur durch das Gewicht der Lagergestelle 1 und 1' und der oberen Brennelemente 17' belastet.

Wie aus der Fig.5 weiter hervorgeht, sind die oberen Brennelemente 17' je in einer sie umgebenden Hülle 24 aus einem neutronenabsorbierenden Werkstoff angeordnet. Die Hüllen 24 sind je mit den betreffenden Brennelementen 17' fest verbunden und so geformt, dass sie mit den Brennelementen 17' je eine in einen der oberen Kanäle 17' in vertikaler Richtung einführbare Einbaueinheit bilden. Darstellungsgemäss kann das obere Lagergestell 1' mit einer Bauhöhe ausgeführt sein, welche kleiner ist als die Bauhöhe des unteren Lagergestells 1 und welche daher nur einem Bruchteil der Länge der Brennelemente 17' entspricht. Bei dieser Ausführung können die Gitterrostelemente 3 des oberen Lagergestells 1' auch aus einem schweissbaren Werkstoff bestehen und im wesentlichen als Führungsanordnung für die durch die Brennelemente 17' und die Hüllen 24 gebildeten Einbaueinheiten ausgebildet sein.

Es sind zahlreiche abgewandelte Ausführungsformen der Erfindung möglich. Die Gitterrostelemente 2, 3 können mit beliebigen, auch unterschiedlichen Höhenabmessungen ausgeführt sein, welche eine Anpassung der Bauhöhe des Lagergestells 1 bzw. 1' an die Längenabmessungen der jeweils einzulagernden Brennelemente 17 bzw. 17' gestatten. Ein aus vorstehend beschriebenen Gitterrostelementen 2, 3 zusammengesetzter Lagergestellkörper auch auf einer separaten, z.B. in Form einer auf dem Boden des Lagerbeckens abgestützten Grundplatte ausgebildeten, die Brennelemente tragenden Stützkonstruktion angeordnet und/oder mit einer auf das oberste Gitterrostelement 3 aufsetzbaren, z.B. plattenförmigen, oberen Haltekonstruktion verbunden sein. Ferner ist auch eine Ausführung möglich, bei der nur eine Teilzahl der Blechstreifen jedes der Gitterrostelemente 2, 3, z.B. bei doppelwandiger Ausführung z.B. jeder zweite Blechstreifen, mit Vertiefungen 12, 12' und Vorsprüngen 11 bzw. Zwischenstücken 13 versehen sind.

Zusammenfassend lässt sich die Erfindung wie folgt beschreiben:

Ein in ein Lagerbecken einsetzbares Lagergestell 1 enthält mehrere vertikale Kanäle 7 zur Aufnahme von Brennelementen 17. Die Wände der Kanäle 7 sind durch sich kreuzende Blechstreifen 4, 4a, 5, 5a aus einem neutronenabsorbierenden Werkstoff gebildet, welche in mehreren, schichtweise übereinander stapelbaren, formstabilen Gitterrostelementen 2, 3 angeordnet sind. Die Gitterrostelemente 2, 3 sind je mit mehreren, an den oberen und unteren Rändern ihrer Blechstreifen 4, 4a, 5, 5a ausgebildeten nutenartigen Vertiefungen 12 und mit mehreren, den entsprechenden Vertiefungen 12 des benachbarten Gitterrostelements 2 bzw. 3 zugeordneten Kupplungsteilen 11 versehen, welche so geformt sind, dass bei aufeinander aufgesetzten Gitterrostelementen 2, 3 die Kupplungsteile 11 und Vertiefungen 12 zumindest teilweise formschlüssig ineinandergreifen. Entsprechend kann das Lagergestell 1 in einer mit geringem Arbeits- und Kostenaufwand realisierbaren, einfachen Bauweise ausgeführt werden, welche eine Mechanisierung der Montage gestattet und auf einfache Weise einen weiteren Ausbau bzw. eine Aenderung der Lageranordnung ermöglicht.

## Patentansprüche

1. Lagergestell zum Lagern nuklearer Brennelemente (17, 17'), mit mehreren nebeneinander angeordneten, zur Aufnahme der Brennelemente (17, 17') bestimmten vertikalen Kanälen (7, 7'), deren Wände durch übereinanderstehend angeordnete, sich kreuzende Blechstreifen (4, 4a, 5, 5a) aus einem neutronenabsorbierenden Material gebildet sind, dadurch gekennzeichnet, dass die Blechstreifen (4, 4a, 5, 5a) in mehreren, schichtweise aufeinander aufsetzbaren und voneinander trennbaren Montageeinheiten angeordnet und in diesen zu je einem formstabilen Gitterrostelement (2, 3) vereinigt sind und dass die Gitterrostelemente (2, 3) je mit mehreren, zumindest in einer Teilzahl der Blechstreifen (4, 4a, 5, 5a) an deren oberen und unteren Rändern ausgebildeten nutenartigen Vertiefungen (12, 12') und mit mehreren, zum Einführen in die entsprechenden Vertiefungen (12, 12') des benachbarten Gitterrostelements (2 bzw. 3) bestimmten Kupplungsteilen versehen sind, welche so geformt sind, dass bei aufeinander aufgesetzten Gitterrostelementen (2, 3) die Kupplungsteile und Vertiefungen (12, 12') zumindest teilweise formschlüssig ineinandergreifen.

2. Lagergestell nach Anspruch 1, mit Gitterrostelementen (2, 3), bei denen die je einen Wandabschnitt einer Reihe der Kanäle (7, 7') bildenden Blechstreifen (4, 4a, 5, 5a) je in einem Abstand (A) von einem einen Wandabschnitt einer benachbarten Reihe der Kanäle (7, 7') bzw. einer Aussenwand des Lagergestells bildenden, zusätzlichen Blechstreifen (4, 4a, 5, 5a, 14, 14a, 15, 15a) angeordnet sind, wobei diese zusätzlichen Blechstreifen (4, 4a, 5, 5a, 14, 14a, 15, 15a) ebenfalls mit nutenartigen Vertiefungen (12, 12') ausgeführt sind.

3. Lagergestell nach Anspruch 1 oder 2, dadurch gekennzeichnet, dass die nutenartigen Vertiefungen (12) durch über die Längserstreckung der Blechstreifen (4, 4a, 5, 5a, 14, 14a, 15, 15a) verteilt angeordnete zahnartige Vorsprünge (11) begrenzt sind, welche als Kupplungsteile ausgebildet und so geformt sind, dass bei aufeinander aufgesetzten Gitterrostelementen (2, 3) die Vorsprünge (11) und Vertiefungen (12) nach Art einer Verzahnung ineinandergreifen.

4. Lagergestell nach Anspruch 1 oder 2, dadurch gekennzeichnet, dass die nutenartigen Vertiefungen (12') der Blechstreifen (4, 4a, 5, 5a, 14, 14a, 15, 15a) je in Aufsetzrichtung fluchtend angeordnet sind, und dass die Kupplungsteile je durch ein in die eine Vertiefung (12') einsetzbares und mit der benachbarten Vertiefung (12') zusammenführbares, separates Zwischenstück (13) gebildet sind.

5. Lagergestell nach einem der vorangehenden Ansprüche, dadurch gekennzeichnet, dass die aufeinander aufgesetzten Gitterrostelemente (2, 3) zwischen mehreren, aufrecht angeordneten Verbindungsteilen (23) angeordnet sind, welche je zumindest mit dem untersten und mit dem obersten der Gitterrostelemente (2, 3) fest verbunden sind.

6. Lageranordnung mit mindestens einem Lagergestell nach einem der vorangehenden Ansprüche.

7. Lageranordnung nach Anspruch 6, dadurch gekennzeichnet, dass zur Aufnahme von in einer zweiten Höhenlage einzulagernden, oberen Brennelementen (17') ein auf den oberen Teil des einen, unteren Lagergestells (1) aufsetzbares, oberes Lagergestell (1') vorgesehen ist, das mindestens ein den Gitterrostelementen (2, 3) des unteren Lagergestells (1) entsprechend ausgeführtes Gitterrostelement (3) enthält, in welchem den Kanälen (7) des unteren Lagergestells (1) entsprechende obere Kanäle (7') ausgebildet sind.

8. Lageranordnung nach Anspruch 6, dadurch gekennzeichnet, dass das unterste Gitterrostelement (3) des oberen Lagergestells (1) mit nutenartigen Vertiefungen (12, 12') ausgeführt ist, die zum Zusammenführen mit den entsprechenden, vom obersten Gitterrostelement (3) des unteren Lagergestells (1) abstehenden Kupplungsteilen (11, 13) bestimmt sind.

9. Lageranordnung nach Anspruch 7 oder 8, dadurch gekennzeichnet, dass die Kanäle (7') des oberen Lagergestells (1') zu den Kanälen (7') des unteren Lagergestells (1) fluchtend ausgeführt sind.

10. Lageranordnung nach Anspruch 5 oder 6, dadurch gekennzeichnet, dass die Kanäle (7') des oberen Lagergestells (1') gegenüber den Kanälen (7) des unteren Lagergestells (1) seitlich versetzt ausgeführt sind.

11. Lageranordnung nach einem der Ansprüche 7 bis 9, dadurch gekennzeichnet, dass die Kanäle (7') des oberen Lagergestells (1') je als Führungskanal zur Aufnahme einer mit dem einzulagernden, oberen Brennelement (17') verbundenen Hülle (24) aus einem neutronenabsorbierenden Werkstoff ausgebildet sind.

## Claims

1. Storage framework for the storage of nuclear fuel elements (17, 17') with a plurality of vertical channels (7, 7') arranged next to one another for the purpose of receiving the fuel elements (17, 17'), with the walls of the channels being made of sheet metal strips (4, 4a, 5, 5a) formed of a neutron absorbing material placed one above the other and crossing one another characterised in that the sheet metal strips (4, 4a, 5, 5a) are arranged in a plurality of assembly units which can be placed layer-wise one upon another and are separable from one another and are united in these assembly units to a respective form-stable grid element (2, 3); and in that the grid elements (2, 3) are each provided with a plurality of groove-like recesses (12, 12'), formed at least in some of the sheet metal strips (4, 4a, 5, 5a) at their upper and lower edges, and are provided with a plurality of coupling parts for the purpose of being inserted into the corresponding recesses (12, 12') of the neighbouring grid elements (2 and/or 3), which are formed in such a manner that when the grid elements (2, 3) are placed one upon another the coupling parts and recesses (12, 12') at least partially engage one another in a form fitted manner.

2. Storage framework in accordance with claim 1 with grid elements (2, 3) in which the sheet metal strips (4, 4a, 5, 5a) forming a respective wall section of a row of the channels (7, 7') are each arranged at a distance (A) from an additional sheet metal strip (4, 4a, 5, 5a, 14, 14a, 15, 15a) forming a wall section of a neighbouring row of the channels (7, 7') or an outer wall of the storage framework, with these additional sheet metal strips (4, 4a, 5, 5a, 14, 14a, 15, 15a) being likewise-executed with groove-like recesses (12, 12').

3. Storage framework in accordance with claim 1 or 2 characterised in that the groove-like recesses (12) are bounded by tooth-like projections (11) distributed over the longitudinal extent of the sheet metal strips (4, 4a, 5, 5a, 14, 14a, 15, 15a), which are designed as coupling parts and formed such that when the grid elements (2, 3) are placed one upon the other the projections (11) and recesses (12) engage one another in the manner of meshed teeth.

4. Storage framework in accordance with claim 1 or 2 characterised in that the groove-like recesses (12') of the sheet metal strips (4, 4a, 5, 5a, 14, 14a, 15, 15a) are each arranged to be aligned in the direction of placement; and in that the coupling parts are each formed by a separate intermediate piece (13) which can be inserted into one of the recesses (12') and brought together with the neighbouring recess (12').

5. Storage framework in accordance with one of the preceding claims characterised in that the grid elements (2, 3) placed one upon the other are arranged between a plurality of connection parts (23) placed upright, which are each firmly connected at least to the lowermost and to the uppermost of the grid elements (2, 3).

6. Storage arrangement with at least one storage framework in accordance with one of the above claims.

7. Storage arrangement in accordance with claim 6 characterised in that for the reception of upper fuel elements (17') to be stored at a second vertical level an upper storage framework (1') is provided which can be placed on the upper part of the one, lower storage framework (1) and which contains at least one grid element (3) executed corresponding to the grid elements (2, 3) of the lower storage framework 1) in which upper channels (7') corresponding to the channels (7) of the lower storage framework (1) are formed.

8. Storage arrangement in accordance with claim 6 characterised in that the lowermost grid element (3) of the upper storage framework (1) is executed with groove-like recesses (12, 12') which are intended to be brought together with the corresponding coupling parts (11, 13) projecting from the uppermost grid element 3) of the lower storage framework (1).

9. Storage arrangement in accordance with claim 7 or 8 characterised in that the channels (7') of the upper storage framework (1') are executed to be aligned with the channels (7') of the lower storage framework (1).

10. Storage arrangement in accordance with claim 5 or 6 characterised in that the channels (7') of the upper storage framework (1') are executed to be displaced laterally with respect to the channels (7) of the lower storage framework 1).

11. Storage arrangement in accordance with one of the claims 7 to 9 characterised in that the channels (7') of the upper storage framework (1') are each formed as a guidance channel for receiving a sheath (24) made of a neutron absorbing material connected to the upper fuel element (17') to be stored.

## Revendications

1. Râtelier pour le stockage d'éléments de combustible nucléaire (17, 17'), avec plusieurs canaux verticaux (7, 7') disposés les uns à côté des autres, destinés à recevoir les éléments de combustible (17, 17'), dont les paois sont formées par des bandes de tôle (4, 4a, 5, 5a) qui se croisent, disposées debout les unes sur les autres, en un matériau absorbant les neutrons, caractérisé en ce que les bandes de tôle (4, 4a, 5, 5a) sont disposées dans plusieurs unités de montage, pouvant être placées par couches les unes sur les autres et pouvant être séparées les unes des autres et sont réunies dans celles-ci en respectivement un élément de sommier de forme stable (2, 3), et en ce que les éléments de sommier (2, 3) sont pourvus chacun de plusieurs creux (12, 12') en forme de rainure, réalisés en au moins un nombre partiel des bandes de tôle (4, 4a, 5, 5a) aux bords supérieurs et inférieurs de celles-ci et de plusieurs parties d'accouplement destinées à être insérées dans les creux correspondants (12, 12') de l'élément de sommier avoisinant (2) respectivement (3) qui sont configurées de façon que lorsque les éléments de sommier (2, 3) sont placés l'un sur l'autre, les éléments d'accouplement et les creux (12, 12') viennent au moins partiellement en prise par concordance des formes.

2. Râtelier selon la revendication 1, avec des éléments de sommier (2, 3) où les bandes de tôle (4, 4a, 5, 5a) formant chacune un tronçon de paroi d'une rangée des canaux (7, 7') sont disposées chacune selon un écart (A) d'une bande de tôle additionnelle (4, 4a, 5, 5a, 14, 14a, 15, 15a) formant un tronçon de paroi d'une rangée avoisinante des canaux (7, 7') respectivement d'une paroi extérieure du bâti de stockage, où ces bandes de tôle additionnelles (4, 4a, 5, 5a, 14, 14a, 15, 15a) sont réalisées également avec des creux en forme de rainure (12, 12').

3. Râtelier selon la revendication 1 ou 2, caractérisé en ce que les creux en forme de rainure (12) sont délimités par des saillies en forme de dent (11) reparties sur l'extension longitudinale des bandes de tôle (4, 4a, 5, 5a, 14, 14a, 15, 15a) qui sont réalisées comme parties d'accouplement et qui sont configurées de façon que lorsque des éléments de sommier (2, 3) sont placés les uns sur les autres, les saillies (11) et les creux (12) viennent en prise à la manière d'une denture .

4. Râtelier selon la revendication 1 ou 2, caractérisé en ce que les creux (12') en forme de rainure des bandes de tôle (4, 4a, 5, 5a, 14, 14a, 15, 15a) sont disposées chacune d'une manière alignée dans la direction d'emboîtement, et que les parties d'accouplement sont formées chacune par une pièce intermédiaire séparée (13), pouvant être placée dans un creux (12') et pouvant être réunie avec le creux avoisiant (12').

5. Râtelier selon l'une des revendications précédentes, caractérisé en ce que les éléments de sommier (2, 3) placés les uns sur les autres sont disposés entre plusieurs parties de liaison disposées debout (23) qui sont reliées solidement chacune au moins aux éléments de sommier le plus inférieur et le plus supérieur (2, 3).

6. Agencement de stockage avec au moins un râtelier selon l'une des revendications précédentes .

7. Agencement de stockage selon la revendication 6, caractérisé en ce qu'il est prévu pour la réception d'éléments de combustible supérieurs (17') à stocker dans une deuxième couche en hauteur, un râtelier supérieur (1') pouvant être placé sur la partie supérieure d'un râtelier inférieur (1), qui comporte au moins un élément de sommier (3) réalisé de manière correspondante aux éléments de sommier (2, 3) du râtelier inférieur (1), dans lequel sont réalisés des canaux supérieurs (7') correspondant aux canaux (7) du râtelier inférieur 1 .

8. Agencement de stockage selon la revendication 6, caractérisé en ce que l'élément de sommier le plus inférieur (3) du bâti de stockage supérieur 1 est réalisé avec des creux en forme de rainure (12, 12') qui sont destinés à la réunion avec les parties d'accouplement correspondantes (11, 13) faisant saillie de l'élément de sommier (3) le plus supérieur du râtelier inférieur (1) .

9. Agencement de stockage selon la revendication 7 ou 8, caractérisé en ce que les canaux (7') du râtelier supérieur (1') sont réalisés selon un alignement avec les canaux (7') du râtelier inférieur (1) .

10. Agencement de stockage selon la revendication 5 ou 6, caractérisé en ce que les canaux (7') du râtelier supérieur (1') sont décalés latéralement par rapport aux canaux (7) du râtelier inférieur (1) .

11. Agencement de stockage selon l'une des revendications 7 à 9, caractérisé en ce que les canaux (7') du râtelier supérieur (1') sont réalisés chacun comme canal de guidage pour recevoir une gaine (24) à loger, reliée à l'élément de combustible supérieur (17'), en un matériau absorbant les neutrons .
